# EUROPÄISCHE PATENTANMELDUNG

(11) **EP 1 298 479 A2**
(43) Veröffentlichungstag der Anmeldung: **02.04.2003**
(21) Anmeldenummer: 02102269.4
(22) Anmeldetag: 02.09.2002
(51) Int. Cl.: G02B 21/36

(54) **Mikroskop mit Kontrast erhöhender Bildaufnahmevorrichtung**

(30) Priorität: 28.09.2001 DE 10148188
(71) Anmelder: Leica Microsystems Wetzlar GmbH, 35578 Wetzlar (DE)
(72) Erfinder: Blödorn, Jochen Dr., 35398, Giessen (DE); Rühl, Helmut, 35396, Giessen (DE)
(74) Vertreter: Reichert, Werner F., Dr.

(57) **Zusammenfassung**

Die Erfindung betrifft ein Mikroskop mit einem Bildsensor (5) zur Aufzeichnung der Mikroskopbilder. Mittels einer Blende (2) im Strahlengang der Beleuchtungseinheit und einer Positioniereinheit, welche das Objekt (3) bzw. die Blende (2) bewegt, kann das zu untersuchende Objekt (3) abgetastet werden. Durch Öffnen bzw. Entfernen der Blende (2) aus dem Strahlengang kann mit dem Bildsensor (5) das ganze Bild abgetastet werden.

## Beschreibung

Die Erfindung betrifft ein Mikroskop, welches mit einem Bildsensor zur Aufzeichnung und Speicherung der Mikroskopbilder versehen ist. Es sind eine Vielzahl unterschiedlicher Bildaufzeichnungsvorrichtungen für Mikroskope bekannt. Meist wird eine Videokamera an den Beobachtungsstrahlengang angekoppelt. Derartige Videokameras haben heute meist zweidimensionale Bildsensoren, so dass das ganze Bild in einem Vorgang aufgezeichnet werden kann.

Diese Videokameras sind einfach zu bedienen und liefern schnell ein Bild guter Qualität. Der Nachteil dieser Kameras ist allerdings, dass die Bildqualität durch Abbildungsfehler der Optik sowie durch Streulicht beeinträchtigt wird. Um diese Nachteile zu vermeiden, werden beispielsweise abtastende Mikroskope eingesetzt. Ein solches Mikroskop ist in der EP-A-0 810 457 beschrieben. Der Nachteil einer solchen Vorrichtung ist, dass die Bildabtastung relativ lange dauert und somit auch die Justage des Bildbereichs bzw. die richtige Fokussierung langwierige Prozesse darstellen.

Die Kombination beider Systeme in einem einzigen Mikroskop benötigt zusätzliche optische Mittel, wie beispielsweise Strahlteiler. Zudem sind zwei Bildsensoren - einer für die Flächenabtastung und ein zweiter für die Punktabtastung - notwendig. Somit entstehen hier erhebliche Kosten.

Die Aufgabe der Erfindung ist es, ein kostengünstiges Mikroskop darzustellen, welches wahlweise einen schnellen Überblick über das Bild gibt bzw. eine hochauflösende Abtastung des Bildes erlaubt.

Eine erfindungsgemäße Lösung dieser Aufgabe ergibt sich aus dem Hauptanspruch. Weiterbildungen der Erfindung sind Gegenstand der Unteransprüche.

Erfindungsgemäß wird ein Mikroskop mit einer Beleuchtungseinrichtung und einem zweidimensionalen Bildsensor mit einer zusätzlichen Blende versehen. Diese Blende kann wahlweise in den Strahlengang gebracht werden. Ist die Blende offen bzw. außerhalb des Strahlenganges, so kann mit dem Bildsensor das ganze Bild erfasst werden. Wird die Blende in den Strahlengang eingeführt bzw. wird eine schon im Strahlengang vorhandene Blende bis auf eine oder mehrere kleine Öffnungen, welche beispielsweise punkt- oder schlitzförmig sein können, verwendet, so wird nur noch auf den bzw. die der Blendenöffnungen entsprechenden Bereiche des Bildsensors Licht fallen.

Weiterhin ist eine nicht mit dargestellte Positioniereinheit vorgesehen, welche eine Abtastung des gewünschten Bildbereichs erlaubt. Hierzu bewegt sie wahlweise das Objekt beziehungsweise seinen Objektträger oder auch die Blende. Ebenso kann auch der Bildsensor bewegt werden. Durch die entsprechende Auswertung bzw. Erfassung der Bildpunkte und deren richtige Anordnung in einem Speicher kann nun das gesamte Bild wieder zusammengesetzt werden.

Somit kombiniert die erfindungsgemäße Anordnung die Vorteile eines flächenhaften Bildsensors, welcher schnelle Aufnahmen des gewünschten Bildbereichs ermöglicht, und einer hochauflösenden punktweisen Abtastung. Durch den Einsatz desselben Bildsensors in demselben Strahlengang für beide Betriebsarten ergibt sich eine kostengünstige Anordnung.

In einer besonders vorteilhaften Ausführung der Erfindung besitzt die Blende eine schlitzförmige Öffnung. Diese Öffnung ist vorzugsweise zumindest so lang, wie eine Seite der abzubildenden Fläche. Die Abtastung erfolgt dann vorzugsweise senkrecht zur Längsausdehnung des Schlitzes. Somit kann durch die Bewegung in nur einer Achse das gesamte Bild abgetastet werden.

In einer weiteren vorteilhaften Ausgestaltung der Erfindung besitzt die Blende eine punktförmige Öffnung. Um die ganze abzubildende Fläche abzutasten, ist hier eine Bewegung in zwei Achsen - also in der Ebene - notwendig.

Eine weitere vorteilhafte Ausgestaltung der Erfindung besteht darin, dass die Blende mehrere Blendenöffnungen besitzt. Diese Blendenöffnungen sind vorzugsweise punktförmig ausgebildet und besitzen einen hinreichenden Abstand voneinander, so dass keine Überkopplung von Streulicht zwischen den Abbildungen der einzelnen Blendenöffnungen stattfindet. Dadurch werden in einem Schritt gleichzeitig mehrere Bildpunkte des Sensors belichtet. Entsprechend reduziert sich auch die gesamte Erfassungszeit eines Bildes. So kann beispielsweise bei zehn Blendenöffnungen, welche somit zehn Bildpunkte gleichzeitig belichten, die gesamte Aufzeichnungszeit auf ein Zehntel verkürzt werden.

In einer weiteren vorteilhaften Ausgestaltung der Erfindung ist die Blendenöffnung derart gestaltet, dass sie in einer bzw. zwei Achsen näherungsweise der Größe eines Bildpunktes des Bildsensors entspricht. So entspricht beispielsweise bei einer schlitzförmigen Blende die Breite der Blende einem Bildpunkt des Bildsensors. Bei einer punktförmigen Blende entspricht die Länge und die Breite der Blendenöffnung der Länge bzw. Breite eines Bildpunktes des Bildsensors. Damit kann wirkungsvoll verhindert werden, dass vom Bildsensor Streulicht aufgefangen wird, da exakt nur ein Bildpunkt des Bildsensors beleuchtet wird. Die optimale Lichtausbeute wird allerdings nur bei sehr präziser Justage von Blendenöffnung und Bildsensor erreicht. Um hier zumindest geringfügige Toleranzen zuzulassen, ist es zweckmäßig, die Blendenöffnung geringfügig größer als einen Bildpunkt auf dem Bildsensor zu dimensionieren.

Eine weitere vorteilhafte Ausgestaltung der Erfindung besteht darin, dass eine zusätzliche Auswerteeinheit vorhanden ist. Die Aufgabe dieser Auswerteeinheit ist die Analyse und Verarbeitung der Bildinformationen des Bildsensors. So ermittelt diese aus dem Abbild der Blende auf dem Bildsensor die richtige Position der einzelnen Bildpunkte und übermittelt an die Speichereinheit jeweils die Bildwerte des mittleren Bildpunktes auf dem Bildsensor. Dadurch muss an die Speichereinheit nicht die aktuelle Position des Objekts übermittelt werden, da diese aus den Informationen des zweidimensionalen Bildsensors gewonnen werden kann. Weiterhin ist dadurch auch eine Abtastung mit einer sehr toleranzbehafteten Positioniereinheit möglich. Ebenso kann an Stelle einer Positioniereinheit, welche jeweils individuelle Positionen ansteuert, auch ein Antrieb, welcher eine kontinuierliche Bewegung des Objekts realisiert, eingesetzt werden.

Die Erfindung wird nachstehend ohne Beschränkung des allgemeinen Erfindungsgedankens an Hand von Ausführungsbeispielen unter Bezugnahme auf die Zeichnungen exemplarisch beschrieben.

Es zeigen:
- Fig. 1:: eine schematische Darstellung der Erfindung mit bewegtem Objekt;
- Fig. 2:: schematische Darstellung der Erfindung mit bewegter Blende;
- Fig. 3a:: Blende mit Schlitz;
- Fig. 3b:: Blende mit punktförmiger Öffnung;
- Fig. 3c:: Blende mit mehreren Öffnungen.

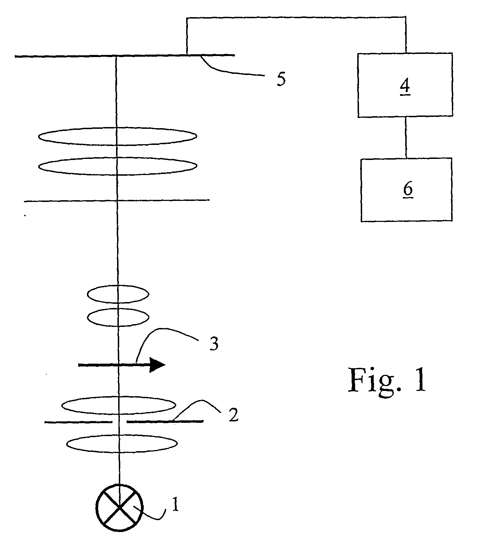

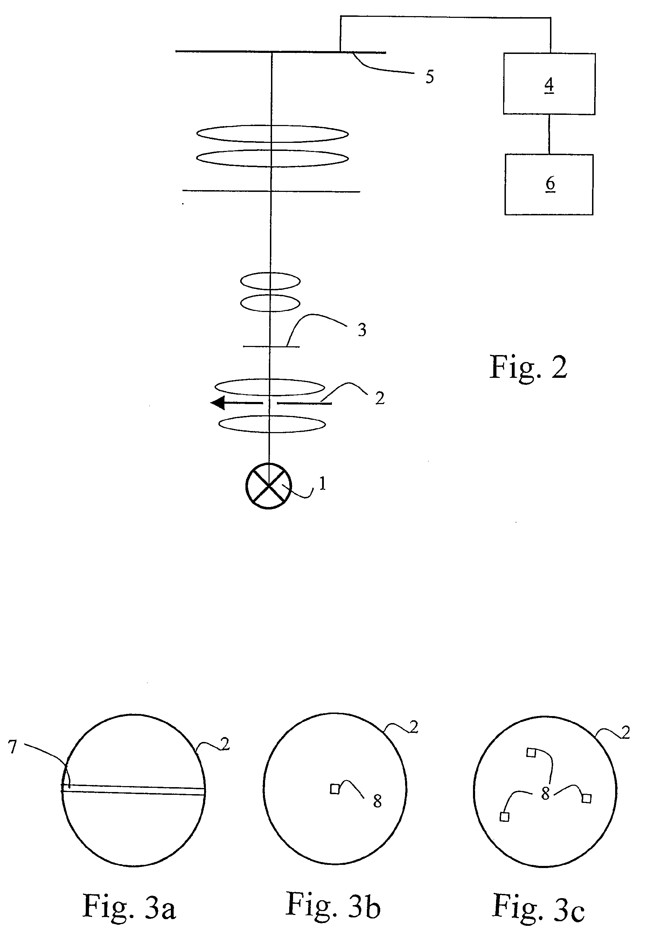

In Fig. 1 ist in allgemeiner und stark vereinfachter Form eine erfindungsgemäße Anordnung dargestellt. Das Licht einer Lichtquelle 1 fällt über eine Blende 2 auf das Objekt 3 und wird über weitere Linsensysteme auf den Bildsensor 5 abgebildet. Dieser ist mit einer Speichereinheit 4 und diese wiederum mit einer Auswerteeinheit 6 verbunden. Das Objekt 3 kann in der Ebene des Pfeils bewegt werden. Da die zwischen dem Objekt 3 und dem Bildsensor 5 angeordneten Linsensysteme an sich bekannt sind, wurden sie ohne Bezugszeichen und nähere Erläuterungen in die Figuren 1 bzw. 2 eingefügt.

Fig. 2 zeigt eine Anordnung ähnlich der in Fig. 1, wobei hier ausschließlich die Blende 2 bewegt wird. Dies wird ebenfalls durch einen Pfeil verdeutlicht.

Die Figuren 3a, 3b, 3c zeigen jeweils unterschiedliche Ausführungsformen der Blende 2. In Fig. 3a ist eine schlitzförmige Blende dargestellt. Das bedeutet, dass die obere und die untere Blendenhälfte - mit Ausnahme des diametral positionierten Spaltes 7 - opak ausgebildet sind. In Fig. 3b ist eine punktförmige Blende 8 dargestellt. Mit Ausnahme der zentral positionierten "punktförmigen" Öffnung ist die Blende 2 opak ausgebildet. In Fig. 3c wird eine Blende mit mehreren "punktförmigen" Öffnungen 8 zur gleichzeitigen Belichtung mehrerer Punkte gezeigt.

### Bezugszeichenliste

- 1 -: Lichtquelle
- 2 -: Blende
- 3 -: Objekt
- 4 -: Speicher/Speichereinheit
- 5 -: Bildsensor
- 6 -: Auswerteeinheit
- 7 -: Spalt von (2)
- 8 -: punktförmige Öffnung(en) von (2)

## Patentansprüche

1. Mikroskop mit einer Beleuchtungseinrichtung und einem zweidimensionalen Bildsensor zur elektronischen Erfassung des mikroskopischen Bildes eines Objekts auf einem Objektträger, **dadurch gekennzeichnet, dass** die Beleuchtungseinrichtung eine Blende (2) besitzt, welche wahlweise in den Strahlengang gebracht werden kann, und eine Positioniereinheit vorhanden ist, welche das Objekt (3) beziehungsweise seinen Objektträger oder auch die Blende (22) zur Abtastung derart im Strahlengang bewegt, dass der zu untersuchende Bereich des Objekts (3) von dem durch die Blende (2) hindurch tretenden Lichtbündel abgetastet wird, und ein Speicher (4) vorhanden ist, welcher die Bildinformationen während der Abtastung speichert, so dass die Bildinformationen nach der Abtastung abrufbar sind.

2. Mikroskop nach Anspruch 1, **dadurch gekennzeichnet, dass**
die Blende (2) eine schlitzförmige Blendenöffnung (7) besitzt, welche sich vorzugsweise von einer Seite der abzubildenden Fläche bis zur gegenüber liegenden Seite erstreckt, und die Abtastung nur in einer Achse senkrecht zur Längsachse der Blendenöffnung (7) erfolgt.

3. Mikroskop nach Anspruch 1, **dadurch gekennzeichnet, dass**
die Blende (2) eine punktförmige Blendenöffnung (8) besitzt und die Abtastung über die Fläche des zu untersuchenden Bereichs des Objektes (3) erfolgt.

4. Mikroskop nach Anspruch 1, **dadurch gekennzeichnet, dass**
die Blende (2) mehrere - vorzugsweise punktförmige - Blendenöffnungen (8) besitzt.

5. Mikroskop nach einem der vorhergehenden Ansprüche, **dadurch gekennzeichnet, dass** die Größe bzw. Breite der Blendenöffnungen (7 bzw. 8) näherungsweise der Größe bzw. Breite eines Bildpunktes des Bildsensors (5) entspricht.

6. Mikroskop nach einem der vorhergehenden Ansprüche, **dadurch gekennzeichnet, dass** eine Auswerteeinheit (6) vorhanden ist, welche das Abbild der Blende (2) auf dem Bildsensor (5) analysiert und die Bildinformationen des bzw. der Bildpunkte, welche in der Mitte des bzw. der abgebildeten Bildpunkte liegen, auswertet und zur Speicherung an die Speichereinheit (4) weiterleitet.
